# EUROPEAN PATENT APPLICATION

(11) **EP 4 450 959 A1**
(43) Date of publication of application: **23.10.2024**
(21) Application number: 22907031.3
(22) Date of filing: 26.10.2022
(51) Int. Cl.: G01N 23/04, G01N 23/18, G06T 7/00

(54) **INFORMATION PROCESSING DEVICE, INFORMATION PROCESSING METHOD, PROGRAM, AND RECORDING MEDIUM**

(30) Priority: 13.12.2021 JP 2021201740
(71) Applicant: FUJIFILM Corporation, Tokyo 106-8620 (JP)
(72) Inventor: IKEDA, Haruka, Tokyo 106-8620 (JP)
(74) Representative: Meissner Bolte Partnerschaft mbB
(86) International application number: PCT/JP2022/039845
(87) International publication number: WO 2023/112497

(57) **Abstract**

Provided are an information processing apparatus, an information processing method, and a program that can extract a detection target region from a transmission image of an examination object obtained with radiation and can optimize a workflow for a detection result of the detection target region. An information processing apparatus includes a processor, in which the processor acquires a transmission image of an examination object obtained with radiation, extracts a detection target region from the transmission image, acquires a feature value for the extracted detection target region, and determines a priority of the detection target region based on the feature value.

## Description

### BACKGROUND OF THE INVENTION

### 1. Field of the Invention

The present disclosure relates to an information processing apparatus, an information processing method, and a program, and particularly, to information processing technology applied to processing of displaying a result of image processing on a transmission image obtained with radiation.

### 2. Description of the Related Art

In the related art, a defect examination device has been proposed in which each of a plurality of defects occurring on a surface of a steel plate detected from captured data obtained by imaging the surface of the steel plate is classified into any one of a harmful defect or a harmless defect based on a feature value obtained from a brightness, a shape, and a size of the defect in the captured data, and the classified harmful defects are classified by a rank representing a severity of the defect at least in accordance with a type of the defect and a size of the defect (JP2021-156757A).

### SUMMARY OF THE INVENTION

One embodiment according to the technology of the present disclosure provides an information processing apparatus, an information processing method, and a program that can extract a detection target region from a transmission image of an examination object obtained with radiation and can optimize a workflow for a detection result of the detection target region.

A first aspect relates to an information processing apparatus comprising: a processor, in which the processor acquires a transmission image of an examination object obtained with radiation, extracts a detection target region from the transmission image, acquires a feature value for the extracted detection target region, and determines a priority of the detection target region based on the feature value.

In the information processing apparatus according to a second aspect, an amount of the radiation applied to the examination object corresponds to an amount of radiation in a case in which radiation in a wavelength range of X-rays is applied for 1 second or longer and 5 minutes or shorter in a range of a tube voltage of 60 kV or more and 450 kV or less and in a range of a tube current of 1 mA or more and 10 mA or less.

In the information processing apparatus according to a third aspect, the transmission image satisfies a required image quality level.

In the information processing apparatus according to a fourth aspect, the examination object is a metal.

In the information processing apparatus according to a fifth aspect, the feature value includes a depth on the transmission image in the extracted detection target region or a thickness of the examination object.

In the information processing apparatus according to a sixth aspect, the depth is acquired from a pixel value of the transmission image, an imaging condition in a case of acquiring the transmission image, and three-dimensional model data of the examination object.

In the information processing apparatus according to a seventh aspect, the feature value is a pixel value.

In the information processing apparatus according to an eighth aspect, the feature value includes a pixel value of a peripheral region of the extracted detection target region.

In the information processing apparatus according to a ninth aspect, the feature value includes any of a major axis, an area, or a shape of the detection target region.

In the information processing apparatus according to a tenth aspect, the feature value is a numerical value calculated by combining any of a major axis of the detection target region, an area of the detection target region, a shape of the detection target region, a pixel value of the detection target region, or a pixel value of a peripheral region of the detection target region.

In the information processing apparatus according to an eleventh aspect, the feature value is a numerical value calculated from distribution information on two or more detection target regions.

In the information processing apparatus according to a twelfth aspect, the processor controls a display content of the detection target region displayed on a display screen based on the determined priority.

In the information processing apparatus according to a thirteenth aspect, the processor acquires a quality standard required for the examination object to determine whether or not the examination object satisfies the quality standard, and determines the priority of the detection target region based on the feature value in a case in which the examination object satisfies the quality standard.

A fourteenth aspect relates to an information processing method executed by an information processing apparatus including a processor, the information processing method comprising: a step of acquiring a transmission image of an examination object obtained with radiation; a step of extracting a detection target region from the transmission image; a step of acquiring a feature value for the extracted detection target region; and a step of determining a priority of the detection target region based on the feature value.

A fifteenth aspect relates to a program causing an information processing apparatus including a processor to execute an information processing method comprising: a step of acquiring a transmission image of an examination object obtained with radiation; a step of extracting a detection target region from the transmission image; a step of acquiring a feature value for the extracted detection target region; and a step of determining a priority of the detection target region based on the feature value.

According to the present invention, the detection target region can be extracted from the transmission image of the examination object obtained with the radiation, and the workflow for the detection result of the detection target region can be optimized.

### BRIEF DESCRIPTION OF THE DRAWINGS

Fig. 1 is a block diagram illustrating an information processing apparatus according to an embodiment.
Fig. 2 is a block diagram illustrating an example of object captured data.
Fig. 3 is a block diagram illustrating an example of product data.
Fig. 4 is a block diagram illustrating a processing function realized by a control unit.
Fig. 5 is a block diagram illustrating a configuration example of an imaging system.
Fig. 6 is a flowchart illustrating an information processing method using the information processing apparatus.
Figs. 7A and 7B are diagrams illustrating an example of processing related to a determination of a priority according to the embodiment.
Figs. 8A and 8B are diagrams illustrating another example of the processing related to the determination of the priority according to the embodiment.
Fig. 9 is a diagram illustrating still another example of the processing related to the determination of the priority according to the embodiment.
Fig. 10 is a diagram illustrating still another example of the processing related to the determination of the priority according to the embodiment.
Figs. 11A and 11B are diagrams illustrating an example of a display content of a detection target region obtained through processing of the information processing apparatus.

### DESCRIPTION OF THE PREFERRED EMBODIMENTS

Hereinafter, a preferred embodiment will be described in detail with reference to the accompanying drawings. In the present specification, the same reference numeral will be given to the same configuration element and overlapping description thereof will be omitted as appropriate.

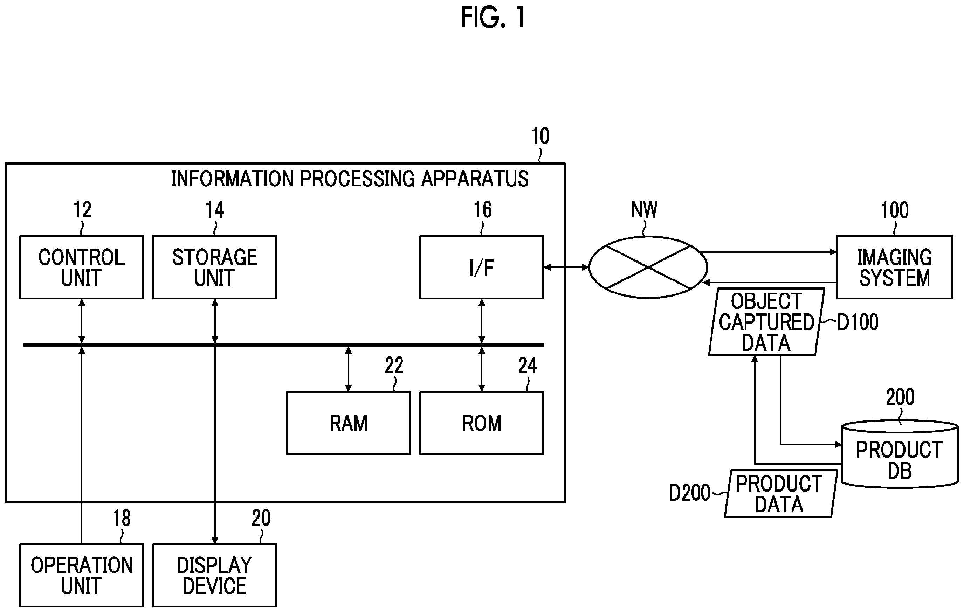

Fig. 1 is a functional block diagram schematically illustrating a functional configuration of an information processing apparatus 10 according to an embodiment of the present disclosure. Here, an example of the information processing apparatus 10 applied to an industrial radiography system that examines an examination object in a non-destructive manner is illustrated. The information processing apparatus 10 is an apparatus that executes processing of extracting a defect region, which is a detection target region, from a transmission image obtained by imaging an industrial product, which is the examination object, with radiation, and determines a priority of the detection target region. In addition, the information processing apparatus 10 is an apparatus that causes a display device to perform the display in accordance with the priority of the detection target region.

As illustrated in Fig. 1, the information processing apparatus 10 according to the embodiment mainly includes a control unit 12, a storage unit 14, an input/output interface (hereinafter, referred to as an I/F) 16, a random access memory (RAM) 22, and a read only memory (ROM) 24. An operation unit 18 and a display device 20 are connected to the information processing apparatus 10. The operation unit 18 provides a command necessary for the information processing apparatus 10 based on an operation of an operator. The display device 20 displays various information in accordance with the control of the control unit 12.

The control unit 12 includes a central processing unit (CPU) that controls an operation of each unit of the information processing apparatus 10. The control unit 12 receives the operation input from the operator via the operation unit 18, and transmits a control signal corresponding to the operation input to each unit of the information processing apparatus 10 to control the operation of each unit. The control unit 12 reads out various programs stored in the storage unit 14, the ROM 24, and the like, loads the programs in the RAM 22, and executes processing, to collectively control the respective units. The control unit 12 controls the entire information processing apparatus 10. The control unit 12 receives the operation input from the operator via the operation unit 18, and transmits a control signal corresponding to the operation input to each unit of the information processing apparatus 10 to control the operation of each unit.

The storage unit 14 is a unit for storing data including an operating system and a control program used by the control unit 12. As the storage unit 14, for example, a device including a magnetic disk, such as a hard disk drive (HDD), or a device including a flash memory, such as an embedded multi media card (eMMC) or a solid state drive (SSD), can be used. The storage unit 14 may store object captured data D 100 and product data D200, which will be described below.

The I/F 16 executes input and output of various data (information) to and from the information processing apparatus 10. The I/F 16 performs communication with an external apparatus via, for example, a network NW. As a method of transmitting and receiving data between the information processing apparatus 10 and the external apparatus, wired communication (for example, a local area network (LAN), a wide area network (WAN), or the Internet connection) or wireless communication (for example, a LAN, a WAN, or the Internet connection) can be used.

The operation unit 18 is an input device that receives the operation input from the operator, and includes a keyboard for character input, a pointing device (a mouse, a trackball, or the like) for operating a pointer, an icon, or the like displayed on the display device 20. It should be noted that, instead of or in addition to the above-described unit, a touch panel can also be provided on a surface of the display device 20 as the operation unit 18.

The display device 20 is, for example, a device such as a liquid crystal display, and can display various information, such as a transmission image, which is the examination target.

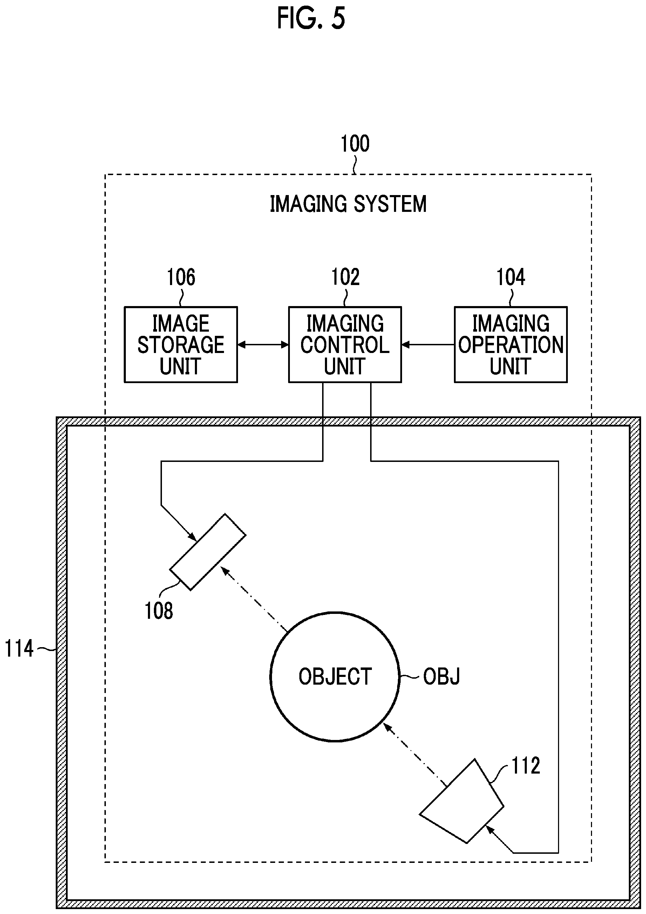

The information processing apparatus 10 can acquire the object captured data D 100 including the data of the transmission image obtained by imaging an object OBJ as the examination object with the radiation by the imaging system 100, via the I/F 16 (see Fig. 5). The object OBJ is, for example, an industrial product, which is a metal. It should be noted that a method of inputting the object captured data D 100 into the information processing apparatus 10 from the imaging system 100 is not limited to the communication via the network NW described above. For example, the information processing apparatus 10 and the imaging system 100 may be connected to each other by a universal serial bus (USB) cable, Bluetooth (registered trademark), infrared communication, or the like, or the object captured data D 100 may be stored in a memory card, which is attachable to and detachable from the information processing apparatus 10 and readable by the information processing apparatus 10, and the captured image data may be input to the information processing apparatus 10 via the memory card.

Further, the information processing apparatus 10 can communicate with a product database (product DB) 200 via the network NW. The product DB 200 stores product data D200 for each industrial product as the object. The control unit 12 can search for and read out object specification information for specifying the object from the captured image data of the object OBJ acquired from the imaging system 100, and can acquire the product data D200 corresponding to the read out object specification information from the product DB 200. By using this product data D200, it is possible to detect the defect as the examination target in accordance with the type or the feature of the object OBJ.

It should be noted that the product DB 200 may be installed on the network NW as in the embodiment, and a manufacturer name or the like of the product data D200 may be updatable, or may be provided in the information processing apparatus 10.

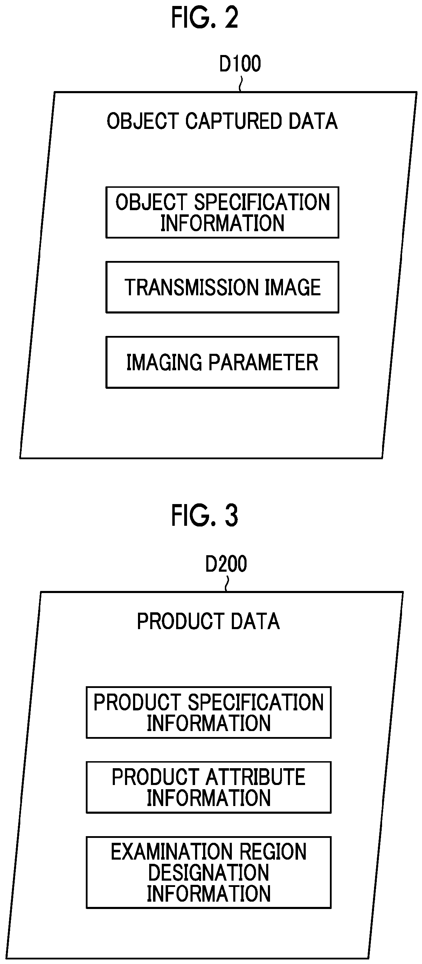

Fig. 2 is a block diagram illustrating an example of the object captured data. The object captured data D100 includes the object specification information, the transmission image, and imaging parameters, as illustrated in Fig. 2.

The object specification information is information for specifying the object OBJ, and includes, for example, information indicating a product name, a product number, identification (ID) information, a manufacturer name, and a technical classification of the object OBJ.

The transmission image is a transmission image of the object OBJ as the examination target and includes a pixel value or information on a resolution.

The imaging parameters are stored in association with each transmission image of the object OBJ, and include information on an imaging date and time of each transmission image, an imaging target location, a distance between the object OBJ and the imaging apparatus during the imaging, an angle with respect to the imaging apparatus, and an exposure time. Further, the imaging parameters include an irradiation start time, an irradiation duration time, an irradiation angle, an irradiation intensity, and the like of the radiation, and conditions related to the irradiation intensity include a tube current and a tube voltage.

Fig. 3 is a block diagram illustrating an example of the product data. As illustrated in Fig. 3, the product data D200 includes product specification information, product attribute information, and examination region designation information. The product data D200 may be stored in the storage unit 14 by being associated with the object captured data D100 via the object specification information and the product specification information, or may be acquired from the product DB 200 each time the defect examination is performed.

The product specification information is information for specifying a product, and includes, for example, information indicating a product name, a product number, a manufacturer name, and a technical classification.

The product attribute information includes, for example, information indicating a material and dimensions of each part of the product, and an application of the product. For example, the product dimensions can be acquired from a two-dimensional drawing and/or three-dimensional model data. The information indicating the application of the product includes, for example, information on a name, a type, a processing state, and an attachment method (for example, a joint portion, a welding portion, screwing, fitting, and soldering) of an apparatus to which the product is attached, or the like.

In addition, the product attribute information includes defect occurrence information related to a quality standard and a pass standard of the examination. The defect occurrence information includes, for example, information on a past examination history and time series, a past examination date and time, a material of the object OBJ, a type of defect that has occurred in the past (for example, foreign material, crack, scratch, air bubble inclusion, welding gas defect, abrasion, rust, and the like), a position, a shape, a size, a depth, and an occurrence part (part coordinates, material thickness, and processing state (for example, a joint portion or a welding portion)), information on a defect occurrence frequency, and at least one information on a captured image of the defect. Further, a standard, such as an ASTM standard, may be included as the pass standard.

The examination region designation information includes information indicating an examination region designated by a manufacturer or the like of each product (for example, information including a position of the examination region and created based on the defect occurrence information such as the existence of the defect occurrence in the past and the frequency information related to the defect occurrence frequency). The examination region designation information is created, for example, by specifying a location in which the defect is likely to occur statistically and structurally based on information in a case in which a manufacturer or the like has repaired the product in the past.

The defect occurrence information includes, for example, information of at least one of the past examination date and time, the material of the object OBJ, the type of the defect that has occurred in the past, the shape, the size, the depth, the occurrence part, or the captured image of the defect.

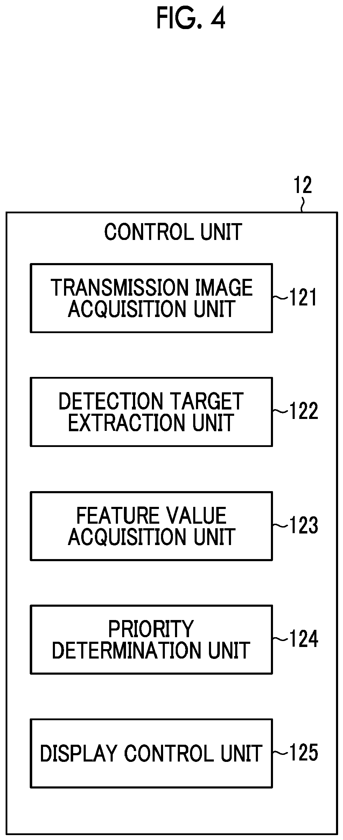

Fig. 4 is a block diagram illustrating an example of the control unit 12. As illustrated in Fig. 4, the control unit 12 includes a transmission image acquisition unit 121, a detection target extraction unit 122, a feature value acquisition unit 123, a priority determination unit 124, and a display control unit 125.

The transmission image acquisition unit 121 acquires the transmission image of the object OBJ obtained with the radiation. The transmission image acquisition unit 121 can acquire the transmission image included in the object captured data D100 stored in the storage unit 14. In addition, the transmission image acquisition unit 121 may acquire the transmission image included in the object captured data D100 from the imaging system 100 or the external apparatus, such as an image management server (not illustrated), via the I/F 16. The transmission image acquisition unit 121 can acquire the transmission image from a removable medium, such as the memory card.

The detection target extraction unit 122 extracts the detection target region from the transmission image. The detection target extraction unit 122 executes, for example, processing of extracting the region from the transmission image by using a segmentation model, and extracts a defect region as the detection target region from the transmission image. As a result, the position and the shape of the defect are specified.

The segmentation model is a learning model that has been trained through machine learning to execute a task of image segmentation, and performs, on the input transmission image, region division of the transmission image by classifying the entire image (all pixels) of the transmission image into whether or not there is the defect region in units of one pixel.

Examples of the defect in the detection target region in a cast or forged metal component or a welded metal component include (1) porosity (a group of minute air bubbles), (2) gas hole (gas), (3) foreign material more dense (FMMD), (4) foreign material less dense (FMLD), (5) excess metal (≈ weld reinforcement), (6) crack (fissuring), (7) saw cut (saw-like or streak-like scratch), and (8) surface damage (other scratches such as "chip" on the surface). In addition, examples of the defect (failure) unique to the welding metal include (1) spatter, (2) undercut, (3) slag entrapment, and (4) poor melting.

The segmentation model may be a model that performs two-class classification detection of whether or not the region is the defect region for each pixel, or may be a model that performs multi-class classification detection of what type of the defect is for each pixel. The segmentation model is configured by, for example, a convolutional neural network (CNN) having a convolutional layer. A fully convolution network (FCN), which is a type of the CNN, is one of models suitable for the task of image segmentation. As the segmentation model of the present example, for example, a neural network having a network structure called "U-net", which is a type of the FCN, can be applied.

The feature value acquisition unit 123 acquires a feature value for the extracted detection target region. Examples of the feature value include elements such as a major axis, an area, a shape, a position, a pixel value, and a depth of the detection region, a distance between the detection regions, the number of the detection regions in a certain test visual field, and the thickness of the detection object. Examples of the distance between the detection regions include a distance between the centroids (or centers) of two regions, and the shortest distance in the line segment connecting points on a boundary line of each region. The feature value acquisition unit 123 acquires at least one of these elements. The feature value acquisition unit 123 can acquire these elements from the transmission image acquired by the transmission image acquisition unit 121. The feature value acquisition unit 123 may acquire the object specification information and the imaging parameters included in the object captured data D100 as the feature value. The feature value acquisition unit 123 may acquire a feature value of a peripheral region of the extracted detection target region, in addition to the feature value of the extracted detection target region. The feature value of the peripheral region may be a pixel value.

The priority determination unit 124 determines the priority of the detection target region based on the feature value acquired by the feature value acquisition unit 123. The priority determination unit 124 determines, for example, a priority of the diagnosis of the defect, which is the detection target region, that is, an importance degree of the necessity of visual recognition by the operator. As the region has a higher importance degree of the necessity of the visual recognition, the priority is determined to be higher.

Further, the priority determination unit 124 may acquire any of the product specification information, the product attribute information, or the examination region designation information included in the product data D200, and may determine the priority of the detection target region with reference to this information.

By providing the priority determination unit 124 in the information processing apparatus 10, the advantageous effect that the following (1) to (3) can be handled is obtained.

For example, (1): in automatic determination of the defect through machine learning or the like, over-detection may be involved. In particular, in a case in which the number of the over-detections is the same as or greater than the number of correct detections (locations in which the actual defects are extracted), the confirmation work for the operator to make a determination of the defect or the non-defect takes time and cost.

In addition, (2) there is a case in which "examination standard" such as a defect size is provided for a defect to be confirmed by the operator, and even in a case in which artificial intelligence (AI) detects the defect having a size smaller than the standard or a signal less than the defect (= "scratch") which is slightly different from the properties of the normal region of the component but is not regarded as the defect, for the purpose of the component examination, the examination result may not affect the determination of whether or not the component can be shipped, it takes time and cost for the operator to confirm all the "scratch" information.

In addition, (3): in the examination of the cast component, in a case in which the serious defect region exists in at least one location, it is determined that the component is "defective (cannot be shipped)", and thus it is considered that it is not necessary to further confirm the individual in detail. In a case in which the purpose of the examination is to determine whether or not such a component, which is the examination target, is available, it is required to efficiently confirm information to be confirmed in order to determine whether or not the component can be shipped, instead of comprehensively confirming each defect.

That is, uniformly displaying the extracted region (defect candidate) without omissions makes the confirmation work of the operator redundant. Further, it is also conceivable that a relatively important defect that should be particularly detected (in a case in which the number of such defects is small) is likely to be overlooked by the operator due to a large number of numerically dominant small defects (discontinuous portions that do not satisfy the standard for the defect).

Therefore, in a case in which the priority determination unit 124 determines the priority of the detection target region, it is possible to filter the display or the hiding of the output result with respect to the defect region based on the result of the priority, and it is possible to sort the defect regions based on the result of the priority. As a result, by optimizing the examination workflow, the examination can be efficiently executed, such as the determination of whether or not the component can be shipped.

The priority determination unit 124 will be described with respect to some standards in a case of determining the priority. As an example, the priority may be determined based on a length of the detection region in a major axis direction as the standard based on the feature value.

As another example, the priority may be determined from the feature value based on a distance between a first detection region and a second detection region closest to the first detection region. Here, the "distance" is the distance between the centroids (or centers) of the two regions or the shortest line segment among the line segments connecting the points on the boundary line of the respective regions, which are acquired by the feature value acquisition unit 123.

As another example, the priority may be determined from the feature value by focusing on the shape of the detection target region or the regularity of the distribution. For example, in a detection region having a feature of a shape such as a so-called elongated shape, in which a ratio of a major axis to a minor axis of the defect region is large, a shape that is away from a circle, such as a concave shape, or a pointed shape, the corresponding location in the examination object is likely to be subjected to stress, and may be determined to have a higher priority.

In addition, in two or more detection target regions, the detection target region in which the distribution information indicating the equal interval occurrence or the linear occurrence is acquired is likely to be broken or cracked, the priority may be determined to be higher than that of the detection target region that is not at equal intervals or linearly.

As another example, the priority of the detection target region forming a field-of-view region may be set to be high in accordance with the number of the detection regions included in a certain test visual field (so-called density) based on the feature value. For example, in a case in which a range of the test visual field that should be the standard for the examination is defined as a region in which the length of the vertical and horizontal sides is determined or a region having a specific length along the welding line, the priority may be determined from only the feature value of the range including the region in which the detection target exists in the entire target image.

In addition, in a case in which the background, that is, the subject other than the examination target, which is shown in the image, is included in a part of the test visual field, the priority may be determined from only the feature value of a range including the region in which the subject is shown, particularly, in the examination visual field. In addition, in a case in which a welding line having a meandering shape or a cast component having a curved outer shape is the examination target, the priority may be determined from the feature value of only a range after the examination visual field is deformed or divided along a contour line of the component.

As another example, the priority may be determined using the pixel value of the detection target region as the feature value. In the transmission image, the defect density information (the characteristics in a case of the foreign material) can be narrowed down by the pixel value. For example, it can be determined that a high-density foreign material exists in a case in which the pixel value is higher than that of the periphery, and a cavity or a low-density foreign material exists in a case in which the pixel value is lower than that of the periphery. Such identification of the type may be executed by automatic determination (AI), but a result in which only the existence of the defect is determined may be classified into types in post-processing based on the pixel values.

In a case in which the pixel value is used as the feature value, the pixel value of the extracted detection target region and the pixel value of the peripheral region of the extracted detection target region can be included, and the priority may be determined from a contrast between the pixel value of the detection target region and the pixel value of the peripheral region. It is possible to perform the determination of setting the priority higher as the detection target region having a stronger contrast with the periphery is stronger.

For example, a first defect region in which the peripheral region has an average pixel value of 30000 and the detection target region has a pixel value of 29980, and a second defect region in which the peripheral region has an average pixel value of 10000 and the detection target region has a pixel value of 9980 are compared with each other. In a case in which a difference derived from the defect is obtained, the difference in the first defect region is 30000 - 29980 = 20, and the difference in the second defect region is 10000 - 9980 = 20. In a case in which a contrast (absolute value) of each difference with respect to the average pixel value of each peripheral region is obtained, the contrast in the first defect region = 20/30000 and the contrast in the second defect region = 20/10000. Since the contrast of the second defect region is larger than the contrast of the first defect region, it is possible to perform a determination to increase the priority of the detection target region of the second defect region.

It is considered that the defect distributions displayed on the image overlap in the depth direction. Therefore, the separation may be performed into a plurality of layers (for each depth) in consideration of the pixel value of the peripheral region with the defect region (= the normal portion of the component), the average pixel value, the continuity or the level difference of the pixel value (for example, a gradient vector or an edge extracted using the Laplacian filter), and then the comparison and determination of the priority of the detection target region may be performed for each layer.

As another example, a numerical value calculated by combining any of the major axis of the detection target region, the area of the detection target region, the shape of the detection target region, the pixel value of the detection target region, or the pixel value of the peripheral region of the detection target region may be used as the feature value, and the priority of the detection target region may be determined based on this feature value.

As another example, in a case in which the time-series change of the examination history is stored, and the information includes a case in which a large number of similar defects occur at the same location or a case in which the size of the defect changes regularly, for example, the priority of the detection target region may be determined to be high based on this information in addition to the determination based on the feature value.

In addition, as another example, in addition to the determination based on the feature value, in a case in which information on a standard (hereinafter, the threshold value) of a distance determined from the ASTM standard or a quality standard such as the characteristic of the examination object, the past examination history, and the examination pass standard is stored, a corresponding threshold value may be acquired based on the individual information of the detection target region or a threshold value may be acquired by being individually set before the examination, to compared the acquired threshold value with the acquired feature value, and then the priority may be performed to be high only in a case in which the former value is greater.

The display control unit 125 controls the display content of the detection target region displayed on the display screen based on the priority of the determination by the priority determination unit 124, and displays the display content on the display device 20.

The display control unit 125 may control the display content by surrounding the display target region with a frame thicker than a normal frame, a dark frame, or an highlighted frame, or by blinking the display target region in order to make a difference in the display priority, so-called conspicuousness of the detection target region in a stepwise manner based on the determined priority, and may display the display target region on the display device 20.

In addition, the display control unit 125 may control the display content by additionally indicating that the priority is high, in a form of a balloon and/or a text in addition to the frame highlighted with the color or the thickness to indicate that the region should be particularly noted, particularly for the region determined to have a high priority, and may display the display target region on the display device 20.

The display control unit 125 may have a function of switching the display or the hiding on the display device 20. The display control unit 125 can display only the detection region of the priority in a range, which is the examination target, for example, and hide the other detection regions. Further, the display control unit 125 may combine the information other than the priority, and may selectively display, for example, only the detection region with the priority of a certain or higher level and being unconfirmed on the display device 20. The display control unit 125 may display the detection region on the display device 20 in the order of the highest priority to the lowest priority while performing the narrowing down in accordance with the priority.

For example, only the detection target region with the highest priority is first highlighted. Alternatively, the periphery of the detection target region with the highest priority is first expanded and displayed. Next, after the operator confirms the region, the detection target region with the second priority may be displayed, and then the regions may be displayed in the order of priority. On the contrary, the display may be performed in the order from the detection target region with the lowest priority to the detection target region with the highest priority.

The priority of the detection target region can be transmitted to the operator by outputting the display content displayed on the display device 20 as a report or the like.

### [Configuration of imaging system]

Hereinafter, an example of the imaging system 100 for capturing the image of the object OBJ will be described. Fig. 5 is a block diagram schematically illustrating a configuration example of the imaging system 100. The imaging system 100 is used to image the object OBJ placed inside an imaging room 114, and comprises an imaging control unit 102, an imaging operation unit 104, an image storage unit 106, a camera 108, and a radiation source 112.

The imaging control unit 102 includes a CPU that controls an operation of each unit of the imaging system 100. The imaging control unit 102 receives the operation input from the operator via the imaging operation unit 104, and transmits the control signal corresponding to the operation input to each unit of the imaging system 100, to control the operation of each unit.

The imaging operation unit 104 includes an input device that receives the operation input from the operator. The operator can input information on the object OBJ, input an indication for the imaging conditions and an instruction for the imaging execution with respect to the camera 108, input an indication for the irradiation conditions of the radiation with respect to the radiation source 112, input an instruction to store the transmission image obtained by the imaging in the image storage unit 106, and the like via the imaging operation unit 104. As described above, the imaging parameters include, for example, the imaging conditions such as the exposure time and the focal length, the imaging angle, and the imaging location. The irradiation conditions of the radiation include an irradiation start time, an irradiation duration time, an irradiation angle, an irradiation intensity, and the like. Further, the conditions related to the irradiation intensity include the tube current and the tube voltage. In the imaging system 100, in a case of capturing the transmission image with the radiation, for example, under conditions such as the tube voltage of 60 kV or more and 450 kV or less and the tube current of 1 mA or more and 10 mA or less, the object OBJ is irradiated with the radiation in a wavelength range of the X-rays (approximately 1 pm to 10 nm) for 1 second or longer and a few minutes or shorter, for example, 5 minutes or shorter.

The image storage unit 106 stores the transmission image of the object OBJ captured by the camera 108. The information for specifying the object OBJ is stored in the image storage unit 106 in association with the captured image data. The camera 108 is configured by, for example, a method of directly converting a light-receiving sensor into a digital value by a flat panel detector (FPD) having a panel (plate-like shape) in which the light-receiving sensors are disposed in a plane (digital detector array (DDA)) to acquire the digital value, and a method of storing a signal in an imaging plate (IP) and digitizing the signal by an external reading device (computed radiography (CR)).

The camera 108 and the radiation source 112 are disposed inside the imaging room 114. The radiation source 112 is, for example, an X-ray source, and a partition wall and an entrance between the imaging room 114 and the outside are protected from X-ray by an X-ray protective material (for example, lead or concrete).

The radiation source 112 irradiates the object OBJ placed inside the imaging room 114 with the radiation in response to an instruction from the imaging control unit 102.

The camera 108 images the object OBJ by receiving the radiation, which is applied to the object OBJ from the radiation source 112 and transmitted through the object OBJ, in response to the instruction to execute the imaging from the imaging control unit 102. The object OBJ is held inside the imaging room 114 by a holding member (for example, a manipulator, a placement table, or a movable placement table, not illustrated), and a distance and an angle of the object OBJ with respect to the camera 108 and the radiation source 112 can be adjusted. The operator can control the relative positions of the object OBJ, the camera 108, and the radiation source 112 via the imaging control unit 102, and can image a desired location of the object OBJ.

The radiation source 112 finishes irradiating the object OBJ with the radiation in synchronization with the finish of the execution of the imaging by the camera 108.

In the example illustrated in Fig. 5, one camera 108 and one radiation source 112 are provided, but the number of the cameras and the radiation sources is not limited to this. For example, there may be a plurality of the cameras and a plurality of the radiation sources, or there may be one camera and one radiation source. The imaging control unit 102, the imaging operation unit 104, and the image storage unit 106 can be realized using a combination of hardware and software of a computer.

A required image quality level (image quality) of the transmission image obtained with the radiation is preferably, for example, a B grade or higher defined in JIS Z 3104 (radiation transmission test method for steel welding joint). By setting the B grade, the detection sensitivity of the "scratch" can be increased.

The image quality level is, for example, determined as the B grade in a case in which an indicator called a gradation meter, a transmittance meter, or an image quality indicator (IQI) is imaged together with the subject and it is determined that the image quality is equal to or higher than a certain level defined by JIS, and determined as an A grade in a case in which the B grade is not satisfied. Further, in Table 4 of JIS Z 3104, a standard regarding the observation of the transmission photograph (transmission image) is set.

### [Information processing method]

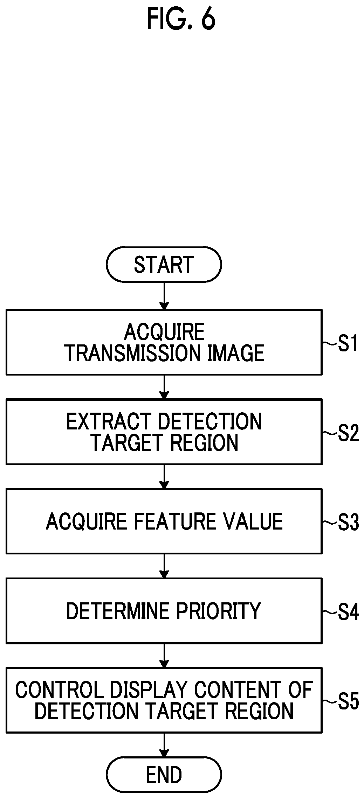

Hereinafter, an information processing method using the information processing apparatus 10 will be described with reference to the flowchart illustrated in Fig. 6.

As illustrated in Fig. 6, the information processing method comprises, as an example, a step (step S 1) of acquiring the transmission image, a step (step S2) of extracting the detection target region, a step (step S3) of acquiring the feature value, a step (step S4) of determining the priority, and a step (step S5) of controlling the display content of the detection target region.

In step S1, the transmission image of the examination object obtained with the radiation is acquired. The transmission image acquisition unit 121 of the control unit 12 acquires the transmission image from the storage unit 14, the imaging system 100, the external apparatus, such as the image management server (not illustrated), via the I/F 16. The transmission image may be included in the object captured data D100.

In step S2, the detection target region is extracted from the transmission image. The detection target extraction unit 122 of the control unit 12 extracts the detection target region from the transmission image.

In step S3, the feature value for the extracted detection target region is acquired. The feature value acquisition unit 123 of the control unit 12 acquires the feature value for the extracted detection target region. As described above, examples of the feature value include elements such as the major axis, the area, the shape, the position, the pixel value, and the depth of the detection region, the distance between the detection regions, the number of the detection regions in a certain test visual field, and the thickness of the detection object. Examples of the distance between the detection regions include a distance between the centroids (or centers) of two regions, and the shortest distance in the line segment connecting points on a boundary line of each region.

In step S4, the priority of the detection target region is determined based on the feature value acquired in step S3. The priority determination unit 124 of the control unit 12 determines the priority of the detection target region based on the feature value acquired by the feature value acquisition unit 123. As described above, the priority determination unit 124 determines the priority of the diagnosis of the defect, which is the detection target region, and the importance degree of necessity of the visual recognition by the operator.

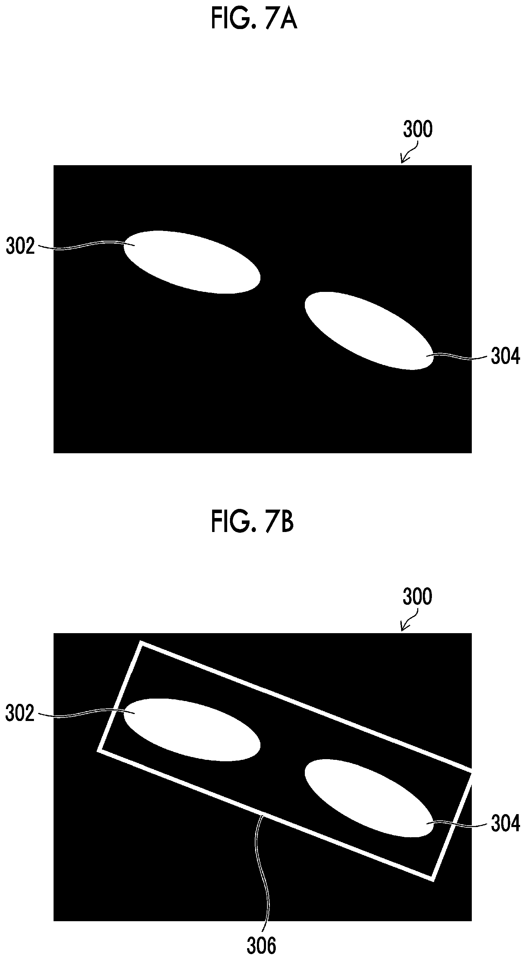

Hereinafter, the determination of the priority of the embodiment will be described. Figs. 7A and 7B are diagrams illustrating an example of processing related to the determination of the priority according to the embodiment.

As illustrated in Fig. 7A, the detection target extraction unit 122 executes the processing of extracting the region from the transmission image by using the segmentation model, and extracts the detection target region. As illustrated in Fig. 7A, two elliptical defect regions 302 and 304, which are the detection target regions, are extracted on a segmentation image 300 by the detection target extraction unit 122. Next, the feature value acquisition unit 123 can acquire, for example, the major axis, the area, the shape, or the distance between the detection regions of the defect regions 302 and 304, which are the detection target regions, as the feature value. The two defect regions 302 and 304 are continuously disposed in the major axis direction.

Next, as illustrated in Fig. 7B, in a case in which the continuous direction is along the major axis direction of the defect regions 302 and 304 (indicated by a frame 306), the defect regions 302 and 304 have the same physical properties as in a case in which the cracks exist in a direction of a straight line, and have a potential to be brittle in a specific direction, and thus the priority determination unit 124 determines the priority to be high based on the acquired feature value.

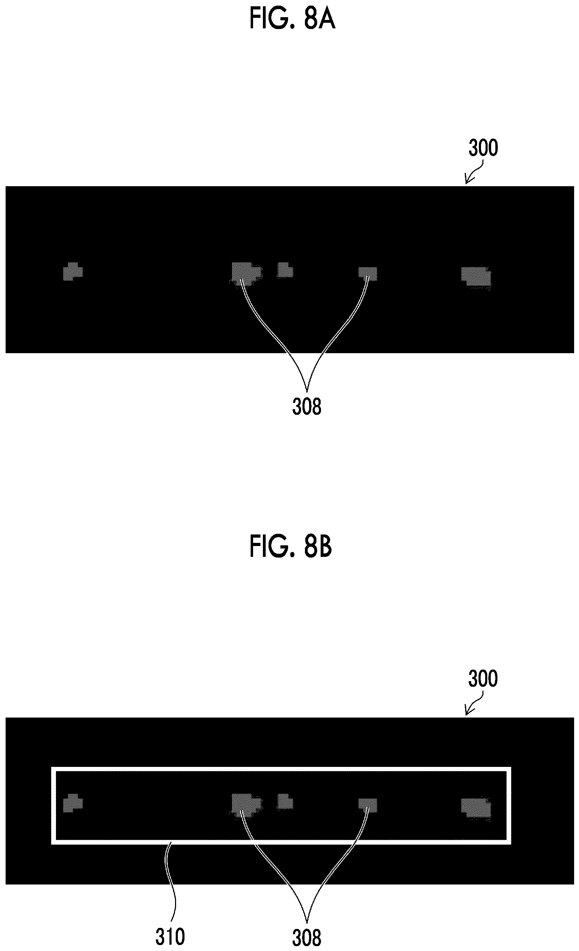

Figs. 8A and 8B are diagrams illustrating another example of the processing related to the determination of the priority of the embodiment. As illustrated in Fig. 8A, the detection target extraction unit 122 executes the processing of extracting the region from the transmission image by using the segmentation model, and extracts the detection target region. As illustrated in Fig. 8A, a plurality of defect regions 308 are extracted on the segmentation image 300 by the detection target extraction unit 122. The defect region 308 is, for example, Chain Porosity in which a welding gas defect occurs at equal intervals.

Next, the feature value acquisition unit 123 acquires, for example, the area, the shape, the distance between the detection regions, and the position of the plurality of defect regions 308, which are the detection target regions, as the feature value.

Next, as illustrated in Fig. 8B, although each of the plurality of defect regions 308 has a (for example, small) dot-like shape, in a case in which the plurality of defect regions 308 are regarded as a group and indicated by a frame 310 having linearity and continuity, the defect regions 308 are important defect locations to be examined, so that the priority determination unit 124 determines the priority to be high based on the acquired feature value.

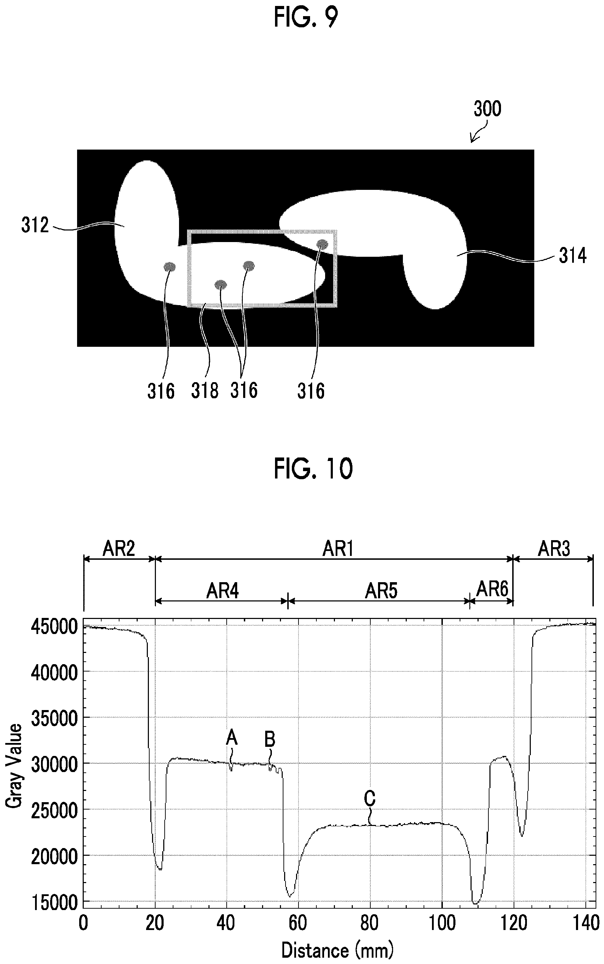

Fig. 9 is a diagram illustrating still another example of the processing related to the determination of the priority of the embodiment. As illustrated in Fig. 9, the detection target extraction unit 122 executes the processing of extracting the region from the transmission image by using the segmentation model, and extracts the detection target region. In Fig. 9, two L-shaped regions indicate subjects 312 and 314, which are the examination targets, and the dot-like circles indicate a plurality of defect regions 316. In addition, a frame 318 indicates a range defined as the examination visual field.

In a case in which three defect regions 316 exist in the frame 318, the defect region 316 included in the frame 318 but not included in the subject 314 is not counted as the feature value related to the subject 312, and the priority determination unit 124 determines the priority for the subject 312 as the two defect regions 316.

Fig. 10 is a diagram illustrating still another example of the processing related to the determination of the priority of the embodiment. Fig. 10 illustrates a graph illustrating a cross-sectional view in which an increase and a decrease of the pixel value, which is the feature value, in the detection target region is cut out in a one-dimensional manner. In the graph, a vertical axis represents the pixel value, and a horizontal axis represents the distance (mm) of the measured cross section (straight line on the transmission image). In Fig. 10, a range of 20 mm to 120 mm is a range AR1 in which the component, which is the examination target, exists. On the other hand, a range AR2 and a range AR3 located on both sides of the range AR1 are ranges that are not the examination target. From the gradient of the graph, it can be seen that the component, which is the examination target, is composed of a range AR4 and a range AR6 (two locations) in which the pixel value is approximately 30000, and a range AR5 in which the pixel value is approximately 23000. The thicknesses of the range AR4 and the range AR6 are larger than the thickness of the range AR5.

A defect region A at a position of 40 mm on the horizontal axis and a defect region B at a position of 50 mm on the horizontal axis are extracted as the detection regions, and the pixel values thereof are acquired. In a case in which it can be determined that the defect region A and the defect region B exist in the range AR4, the priority determination unit 124 can determine, from this information, the priority by comparing only the pixel values of the defect region A and the defect region B.

On the other hand, a defect region C at a position of 80 mm on the horizontal axis is extracted as the detection region, and the pixel value is acquired. In a case in which it can be determined that the defect region C exists in the thin range AR5 having a thickness smaller than the range AR4 as the component from the background feature, even in a case in which the contrasts in the defect region A and the defect region B are the same as the contrast in the defect region C, there is a possibility that the portion having a small thickness may have a more adverse effect on the quality of the component. Therefore, it is not appropriate to simply compare the defect region A with the defect region C, and the defect region B with the defect region C in terms of the contrast. The priority determination unit 124 may determine, from this information, the priority of the detection target region for each thickness (layer) of the specific component. The priority determination unit 124 can determine the priorities of the defect region A and the defect region B by limiting the pixel values to, for example, 30000 (range AR4), and can determine the priority of the defect region C by limiting the pixel value to, for example, 23000 (range AR5).

In addition, in a case in which a coefficient taking into consideration the thickness of the component (thicknesses of the range AR4 and the range AR5) can be obtained, the priority determination unit 124 may also differentiate the superiority or inferiority between the defect region A and the defect region C, and the defect region B and the defect region C, convert the results into the priorities in the same scale, and determine the priorities of the defect region A, the defect region B, and the defect region C.

It should be noted that, as described above, in the range determination of the range AR4, the range AR5, and the range AR6, the separation may be performed into a plurality of layers in consideration of the continuity of the pixel values or the steps. In addition, in a case in which the product data D200 includes information on the thickness (or depth), the separation may be performed into a plurality of layers by using this information.

In step S5, the display content of the detection target region displayed on the display screen is controlled based on the determined priority. The display control unit 125 of the control unit 12 controls the display content of the detection target region displayed on the display screen based on the priority of the determination by the priority determination unit 124, and displays the display content on the display device 20.

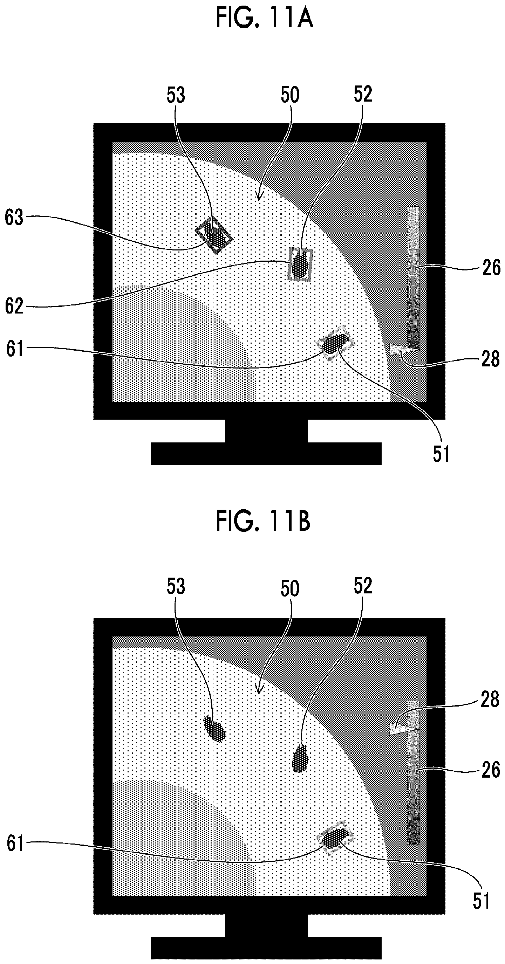

Figs. 11A and 11B are diagrams illustrating an example of the display content of the detection target region obtained through the processing by the information processing apparatus. In Figs. 11A and 11B, the defect that is the detection target region, the priority of the determined defect, and the color of the frame are displayed in association with each other on the density gradations.

As illustrated in Fig. 11A, a metal component 50, which is the examination target, is displayed on the display device 20. The three defect regions 51, 52, and 53 are extracted by the information processing apparatus 10, and the priorities for the defect region 51, the defect region 52, and the defect region 53 are determined. The defect region 51, the defect region 52, and the defect region 53 are displayed on the metal component 50. The information processing apparatus 10 determines the priority to be high in the order of the defect region 53 < the defect region 52 < the defect region 51.

The display device 20 displays density gradations 26 indicating a level of priority and a pointer 28 for displaying and selecting the level of the priority, in addition to the metal component 50, and the defect region 51, the defect region 52, and the defect region 53. In the density gradations 26, a color close to black indicates a lower priority, and a color close to white indicates a higher priority. In a case in which the pointer 28 points to the density gradations 26, the display in which the defect with a priority equal to or higher than the color (level) of the pointed density gradations 26 can be recognized is displayed on the display device 20. The density gradations 26 may be displayed in a colored manner, in addition to the monochrome manner.

In Fig. 11A, the pointer 28 is located at the lower end of the density gradations 26. The defect region 51, the defect region 52, and the defect region 53, which are the defect regions with the priority of the color (equal to or higher than level) indicated by the pointer 28, are highlighted by a frame 61, a frame 62, and a frame 63. The frame 61, the frame 62, and the frame 63 are displayed in a color corresponding to the color (level) of the density gradations 26. The frame 61 indicates that the priority is high in the thinnest color, the frame 63 indicates that the priority is high in the darkest color, and the frame 62 indicates that the priority is intermediate in the intermediate color.

Since the frame 61, the frame 62, and the frame 63 are displayed, the operator can know that the priorities corresponding to the density gradations 26 are determined, and can recognize the level of the priorities of the defect region 51, the defect region 52, and the defect region 53 by further recognizing the colors of the frame 61, the frame 62, and the frame 63.

As illustrated in Fig. 11B, the pointer 28 is located above the density gradations 26. Only the frame 61 indicating the color corresponding to the density gradations 26 is displayed on the defect region 51 with a priority level equal to or higher than the level indicated by the pointer 28. The position of the pointer 28 can be freely selected by the operator, and the level of the priority to be displayed can be selected.

The example of the display content of the detection target region obtained through the processing by the information processing apparatus 10 has been described, but the display content is not limited to this.

By determining the priority based on the detailed information on the shape or the distribution of the detection target region and performing the highlighting, the partial display, or the display in the descending order without uniformly displaying all the defects that are the detection target regions, the operator can clearly recognize the detection location that should be particularly noted, and the efficiency of the examination work is improved.

### <Others>

In the above-described embodiment, the hardware structure of the processing units that execute various types of processing of the control unit 12 is the following various processors. The various processors include a central processing unit (CPU), which is a general-purpose processor that executes software (program) and functions as the various processing units, a programmable logic device (PLD), which is a processor of which a circuit configuration can be changed after manufacture, such as a field programmable gate array (FPGA), and a dedicated electric circuit, which is a processor having a circuit configuration that is designed for exclusive use in order to execute specific processing, such as an application specific integrated circuit (ASIC).

One processing unit may be configured by one of these various processors, or may be configured by two or more processors of same type or different types (for example, a plurality of FPGAs or a combination of the CPU and the FPGA). Moreover, a plurality of processing units can be configured by one processor. As a first example the configuration of the plurality of processing units by one processor, there is a form in which one processor is configured by a combination of one or more CPUs and software, and this processor functions as the plurality of processing units, as represented by a computer, such as a client or a server. Second, there is a form in which a processor, which realizes the functions of the entire system including the plurality of processing units with one integrated circuit (IC) chip, is used, as represented by a system on chip (SoC) or the like. As described above, various processing units are configured by one or more of the various processors described above, as the hardware structure.

Further, the hardware structure of these various processors is, more specifically, an electric circuit (circuitry) in which circuit elements, such as semiconductor elements, are combined.

Each configuration and function described above can be appropriately realized by any hardware, software, or a combination thereof. For example, the present invention can be applied to a program that causes a computer to execute the processing steps (processing procedure), a computer readable storage medium that stores the program (non-transitory storage medium), or a computer on which the program can be installed.

Although examples of the present invention have been described above, it goes without saying that the present invention is not limited to the above-described embodiment, and various modifications can be made without departing from the scope of the present invention.

### Explanation of References

10: information processing apparatus
12: control unit
14: storage unit
16: input/output interface
18: operation unit
20: display device
22: RAM
24: ROM
26: density gradations
28: pointer
50: metal component
51, 52, 53: defect region
61, 62, 63: frame
100: imaging system
102: imaging control unit
104: imaging operation unit
106: image storage unit
108: camera
112: radiation source
114: imaging room
121: transmission image acquisition unit
122: detection target extraction unit
123: feature value acquisition unit
124: priority determination unit
125: display control unit
300: segmentation image
302: defect region
304: defect region
306: frame
308: defect region
310: frame
312: subject
314: subject
316: defect region
318: frame
A, B, C: defect region
AR1: range
AR2: range
AR3: range
AR4: range
AR5: range
AR6: range
D100: object captured data
D200: product data
200: product DB
NW: network
OBJ: object
S1: step
S2: step
S3: step
S4: step
S5: step

## Claims

1. An information processing apparatus comprising:
a processor,
wherein the processor
acquires a transmission image of an examination object obtained with radiation,
extracts a detection target region from the transmission image,
acquires a feature value for the extracted detection target region, and
determines a priority of the detection target region based on the feature value.

2. The information processing apparatus according to claim 1,
wherein an amount of the radiation applied to the examination object corresponds to an amount of radiation in a case in which radiation in a wavelength range of X-rays is applied for 1 second or longer and 5 minutes or shorter in a range of a tube voltage of 60 kV or more and 450 kV or less and in a range of a tube current of 1 mA or more and 10 mA or less.

3. The information processing apparatus according to claim 1 or 2,
wherein the transmission image satisfies a required image quality level.

4. The information processing apparatus according to any one of claims 1 to 3,
wherein the examination object is a metal.

5. The information processing apparatus according to any one of claims 1 to 4,
wherein the feature value includes a depth on the transmission image in the extracted detection target region or a thickness of the examination object.

6. The information processing apparatus according to claim 5,
wherein the depth is acquired from a pixel value of the transmission image, an imaging condition in a case of acquiring the transmission image, and three-dimensional model data of the examination object.

7. The information processing apparatus according to any one of claims 1 to 4,
wherein the feature value is a pixel value.

8. The information processing apparatus according to claim 7,
wherein the feature value includes a pixel value of a peripheral region of the extracted detection target region.

9. The information processing apparatus according to any one of claims 1 to 4,
wherein the feature value includes any of a major axis, an area, or a shape of the detection target region.

10. The information processing apparatus according to any one of claims 1 to 4,
wherein the feature value is a numerical value calculated by combining any of a major axis of the detection target region, an area of the detection target region, a shape of the detection target region, a pixel value of the detection target region, or a pixel value of a peripheral region of the detection target region.

11. The information processing apparatus according to any one of claims 1 to 4,
wherein the feature value is a numerical value calculated from distribution information on two or more detection target regions.

12. The information processing apparatus according to any one of claims 1 to 11,
wherein the processor controls a display content of the detection target region displayed on a display screen based on the determined priority.

13. The information processing apparatus according to any one of claims 1 to 12,
wherein the processor acquires a quality standard required for the examination object to determine whether or not the examination object satisfies the quality standard, and determines the priority of the detection target region based on the feature value in a case in which the examination object satisfies the quality standard.

14. An information processing method executed by an information processing apparatus including a processor, the information processing method comprising:
a step of acquiring a transmission image of an examination object obtained with radiation;
a step of extracting a detection target region from the transmission image;
a step of acquiring a feature value for the extracted detection target region; and
a step of determining a priority of the detection target region based on the feature value.

15. A program causing an information processing apparatus including a processor to execute an information processing method comprising:
a step of acquiring a transmission image of an examination object obtained with radiation;
a step of extracting a detection target region from the transmission image;
a step of acquiring a feature value for the extracted detection target region; and
a step of determining a priority of the detection target region based on the feature value.

16. A non-transitory computer-readable recording medium on which the program according to claim 15 is recorded.
